# EUROPEAN PATENT APPLICATION

(11) **EP 2 995 410 A1**
(43) Date of publication of application: **16.03.2016**
(21) Application number: 15181561.0
(22) Date of filing: 19.08.2015
(51) Int. Cl.: B23K 15/00, B23P 6/00, B23P 15/04, B23K 26/06, B23K 26/28, B23K 101/00, B23K 103/18

(54) **METHOD OF BLADE TIP REPAIR**

(30) Priority: 09.09.2014 US 201462048005 P
(71) Applicant: Rolls-Royce Corporation, Indianapolis, Indiana 46225 (US)
(72) Inventor: Ribic, Brandon, Carmel, IN Indiana 46032 (US); Shuck, Quinlan, Indianapolis, IN Indiana 46220 (US); Earle, Pavlo, Carmel, IN Indiana 46032 (US); Bader, Jacque, Martinsville, IN Indiana 46151 (US); Nordin, Mark, Indianapolis, IN Indiana 46220 (US)
(74) Representative: Rolls-Royce plc

(57) **Abstract**

A method for repairing a blade (10) for use in a gas turbine engine, the method comprising removing a distal tip of an airfoil (16) included in the blade (10) to remove damaged portions of the airfoil and to expose previously internal cooling passages. The method further comprising positioning a tip cap (24) in the place of the removed distal tip to cover the internal cooling passages, and welding the tip cap (24) to the airfoil by applying a directed energy beam onto the tip cap (24) and the airfoil (16) at a joint between the tip cap (24) and the airfoil (16).

## Description

The present disclosure relates generally to gas turbine engines, and more specifically to blade tip repair.

Gas turbine engines are used to power aircraft, watercraft, power generators, and the like. Gas turbine engines typically include a compressor, a combustor, and a turbine. The compressor compresses air drawn into the engine and delivers high pressure air to the combustor. In the combustor, fuel is mixed with the high pressure air and is ignited. Products of the combustion reaction in the combustor are directed into the turbine where work is extracted to drive the compressor and, sometimes, an output shaft. Left-over products of the combustion are exhausted out of the turbine and may provide thrust in some applications.

Rotating gas turbine engine components such as compressor blades, turbine blades, and knife seal rings spin at high speeds. Many of these rotating components are mounted in close proximity to static components such that the components may come into contact during rotation. The components may become cracked or damaged as static and rotating parts come into contact with one with one another in a high temperature environment. In addition gas turbine engine blades may crack or express damage after repeated use. Repairing components such as single crystal blades may be difficult and may take a prolonged amount of time to get the component back into operation.

The present disclosure may comprise one or more of the following features and combinations thereof.

According to an aspect of the present disclosure, a method for repairing a blade for use in a gas turbine engine is taught. The method may comprise removing a distal tip of an airfoil included in the blade to remove damaged portions of the airfoil and to expose previously internal cooling passages, positioning a tip cap in the place of the removed distal tip to cover the internal cooling passages, and welding the tip cap to the airfoil by applying a directed energy beam onto the tip cap and the airfoil at a joint between the tip cap and the airfoil.

In some embodiments, welding the tip cap to the airfoil may include moving the directed energy beam along an airfoil-shaped tool path corresponding to the shape of the airfoil. The method may further comprise determining the airfoil-shaped tool path by measuring the airfoil and calculating a path corresponding to the shape of the airfoil. In some embodiments the method may further comprise measuring the airfoil in some instances, by identifying a plurality of points along the airfoil with a sensor. In some embodiments of the method, a directed energy beam may be directed along a line that is normal to a plane defined by the tip cap. In some embodiments of the method, the directed energy beam which may be a laser may be configured to couple to the tip cap and to the airfoil of the blade.

In some embodiments, the method may further comprise coupling the tip cap to the airfoil before welding the tip cap to the airfoil. Among other coupling methods the tip cap may be coupled to the airfoil by a plurality of tack welds or the tip cap may be coupled to the airfoil by a cap fixture.

Illustratively in some embodiments, the power of the directed energy beam may be adjusted based on a thickness of an airfoil wall at the location the directed energy beam is coupled to the airfoil. The speed of the directed energy beam may be adjusted based on a thickness of the airfoil wall at the location the directed energy beam is coupled to the airfoil. The method wherein the dot size of the directed energy beam may be adjusted based on a thickness of an airfoil wall at the location the directed energy beam is coupled to the airfoil. The method wherein the distance of a laser producing the directed energy beam from the airfoil may be adjusted based on a thickness of the airfoil wall at the location the directed energy beam is coupled to the airfoil.

In some embodiments, the method may further comprise heat treating the blade after the tip cap may be been welded to the airfoil. The method may further comprise machining the tip cap after the tip cap has been welded to the airfoil. Machining the tip cap after the tip cap has been welded to the airfoil may include forming apertures through the tip cap that fluidly communicate with the internal cooling passages. Machining the tip cap after the tip cap has been welded to the airfoil may include production of a flat surface at a distal end of the tip cap. An abrasive coating may be applied to the flat surface at the distal end of the tip cap. The tip cap may be a substantially flat sheet made from a metallic material. The tip cap may have an airfoil shape when viewed normal to a plane defined by the tip cap.

According to another aspect of the present disclosure, a method for repairing a blade for use in a gas turbine engine is taught. The method may comprise machining a distal tip of an airfoil removing coatings and worn areas to produce a planar distal surface, placing a metal sheet on the machined surface of the distal tip of the airfoil to cover cooling passages of the airfoil, tack welding the metal sheet to the machined surface of the distal tip of the airfoil, and applying a laser to weld the metal sheet to bond the metal sheet to the distal tip of the airfoil.

In some embodiments applying a laser to the sheet metal to bond the sheet metal to the distal surface of the airfoil may be performed by applying the laser normal to the distal surface of the distal tip of the airfoil. In some embodiments, heat may be applied to the distal tip and/or sheet metal prior to bonding or joining. In some embodiments, the laser welding may take place in an inert gas rich environment. The method may further comprise, bonding the sheet metal to a portion of the distal tip. Machining the distal tip may include bead blasting. The method may further comprise cleaning the blade tip prior to the step of machining.

The method may further comprise heating a powder deposited along the tip cap to join the powder to the tip cap creating an extension layer on the tip cap lengthening the blade. The method may further comprise bonding the metal sheet to the distal tip of the airfoil by laser welding the metal sheet. The metal sheet may be bonded to the distal tip of the airfoil by heat treatment, which may include brazing, sintering, diffusion bonding, and/or transient liquid phase bonding the metal sheet. The powder may be deposited by spray coating, heat treatment, brazing, welding, additive manufacturing, or a combination thereof. In some embodiments, the extension layer may be machined to create a smooth surface. The metal sheet may be coated with an abrasive matrix. A repaired blade for use in a gas turbine engine may be produced by any one of the methods described herein.

According to another aspect of the invention, a blade for use in a gas turbine engine is taught. The blade may comprise a root formed to include an attachment feature adapted to mate with a central wheel to couple the blade to the central wheel. The blade may include an airfoil having a proximal end arranged to face the root, and a distal tip, opposite the proximal end, wherein the airfoil may include internal cooling passages to conduct air through the airfoil, and a tip cap bonded to the distal tip of the airfoil to provide a uniform covering of the airfoil and provide a surface for adding material to the airfoil. In some embodiments, the tip cap may be bonded to the distal tip of the airfoil by a weld joint.
Fig. 1 is perspective view of a blade adapted for use in a gas turbine engine showing that the blade includes a root, a platform, an airfoil, and cooling passages arranged in the airfoil and suggesting a tip cap may be added to cover the cooling passages and repair the blade as shown in Fig. 2;
Fig. 2 is a perspective view of the blade from Fig. 1 depicting the tip cap coupled to the airfoil along the distal tip of the airfoil replacing a machined away damaged tip to provide a repaired blade and showing that the tip cap is treated to include an abrasive coating and apertures opening into the internal cooling passages of the airfoil;
Fig. 3 is a partially diagrammatic view of an illustrative method of repairing a gas turbine engine blade;
Fig. 4 is a block diagram of the method of repairing a gas turbine engine blade;
Fig. 5 is a partially diagrammatic side elevation of the blade from Figs. 1 and 2 showing a laser beam normal to the tip cap being applied to weld the tip cap to the airfoil; and
Fig. 6 is a top plan view of the blade shown in Fig. 5 showing the tool path followed by the laser for welding the tip cap to the distal tip of the airfoil has an airfoil shape.

For the purposes of promoting an understanding of the principles of the disclosure, reference will now be made to a number of illustrative embodiments illustrated in the drawings and specific language will be used to describe the same.

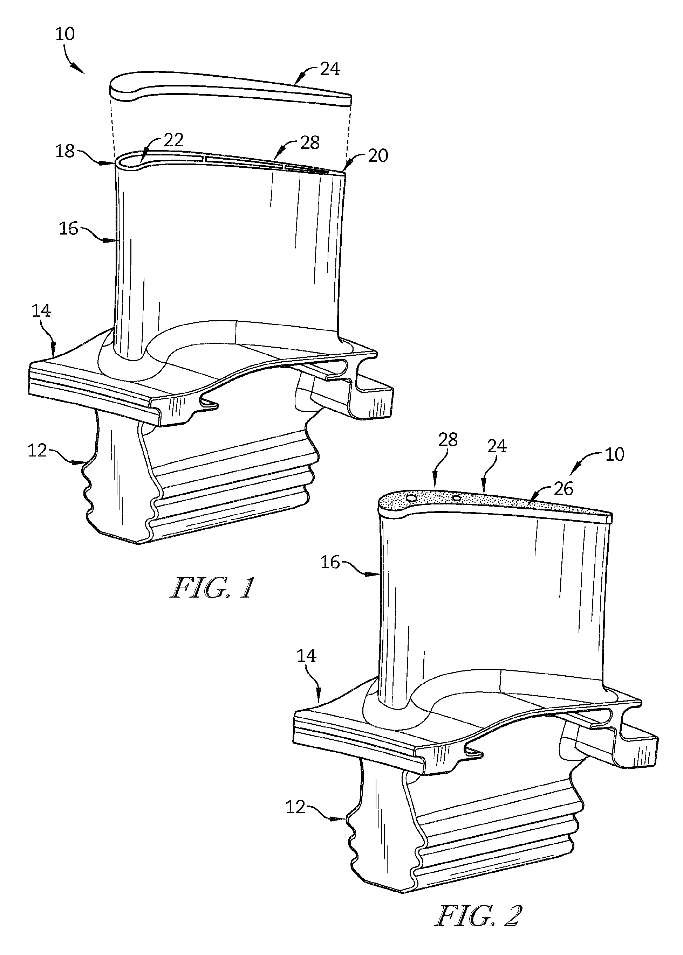

An illustrative blade 10 adapted for use in a gas turbine engine is shown in Figs. 1 and 2. The blade 10 may include a root 12, a platform 14 coupled to the root 12, and an airfoil 16 coupled to the platform 14. The platform 14 may connect the root 12 to the airfoil 16 and may separate the root 12 from the airfoil 16 so that gasses passing over the airfoil 16 are blocked from moving down around the root 12, as suggested in Fig. 1. The airfoil 16 may be aerodynamically shaped to interact with gasses moving over the blade 10.

The airfoil 16 may include a leading edge 18, a trailing edge 20 opposite the leading edge 18 and cooling passages 22 arranged between the leading edge 18 and trailing edge 20, as shown in Fig. 1. The leading edge 18 of the airfoil 16 may be the point at the front of the airfoil 16. The trailing edge 20 of the airfoil1 6 may be the point of at the rear of the airfoil 16 and may have a smaller radius compared to the leading edge 18 of the airfoil, as shown in Fig. 1. The thickness and the curvature of the surface between and including the leading edge and trailing edge may vary to provide an aerodynamic shape. The internal cooling passages 22 may be spaced apart between the leading edge 18 and the trailing edge 20 such that the cooling passages 22 may allow cooling air to flow through the airfoil 16. The cooling air flowing through the cooling passages 22 may maintain the temperature of the blade 10 in the hot sections of a gas turbine engine.

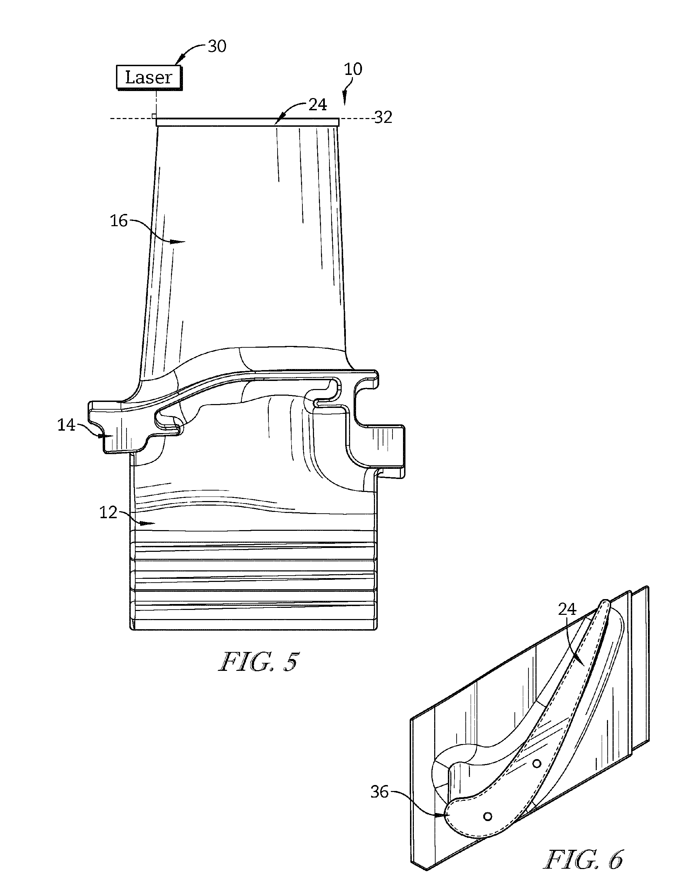

Illustratively, the blade 10 shown in Fig. 1 has been machined to remove a damaged distal tip 28 of the airfoil 16 which is to be replaced by a tip cap 24 to repair the blade 10, as suggested in Fig. 2. The repaired blade 10 may include a tip cap 24 and a coating 26 applied to the tip cap 24 along the distal end of the airfoil 16 as shown in Fig. 2. The tip cap 24 may be welded to the distal tip 28 of the airfoil 16 and may cover the cooling passages 22. The tip cap 24 may cover the entire distal tip 28 of the airfoil 16 or only a portion of the distal tip 28 of the airfoil 16. The tip cap 24 may be made from a material which may exhibit good high temperature strength, oxidation resistance, and/or resistance to wear. In some examples, the tip cap 24 may be a piece of sheet metal such as an alloy which may be cobalt-, nickel- or iron-based and may be alloyed with manganese, chromium, silicon, cobalt, tungsten, tantalum, aluminum, titanium, hafnium, rhenium, molybdenum, nickel, iron, boron, vanadium, carbon, and/or yttrium. In other examples, the tip cap 24 may be a ceramic or composite material in place of a metallic cap. In specific examples, the tip cap 24 may include Mar-M247, Mar-M247LC, L605, Hastelloy X, IN-738, IN-738LC, CM186LC, CMSX-4, CMSX-3.The tip cap 24 may provide a substantially flat surface 25 for applying the coating 26. The tip cap 24 may be in the shape of the airfoil when viewed normal to a plane 32 defined by the tip cap 24, as shown in Figs. 5 and 6. The tip cap 24 may provide a substrate for bonding repair material and the coating 26.

The coating 26 may be an abrasive coating, such as a material which exhibits good high temperature strength, oxidation resistance, and/or resistance to wear, and/or a material which limits clearance between a blade tip and a sealing feature in a gas turbine engine. For example, coating 26 may be a ceramic, ceramic matrix composite, and/or a metallic alloy such as cobalt-, nickel-, or iron-based and may be alloyed with manganese, chromium, silicon, cobalt, tungsten, tantalum, aluminum, titanium, hafnium, rhenium, molybdenum, nickel, iron, boron, vanadium, carbon, and/or yttrium. The coating 26 may be applied to selective regions of the tip cap 24, the entire tip cap 24, and/or any portion of the airfoil 16. The coating 26 may consist of multiple materials or alloys and a system of multiple layers. The coating 26 may be in the shape of the tip cap 24 when viewed normal to the plane 32 defined by the tip cap 24, as shown in Figs. 5 and 6.

Gas turbine engine components such as blade 10 may become damaged during use. The blade 10 may be a blade such as a turbine blade or a compressor blade. Currently, repair of a blade 10 with exposed internal cooling passages, such as cooling passages 22 may be difficult and costly.

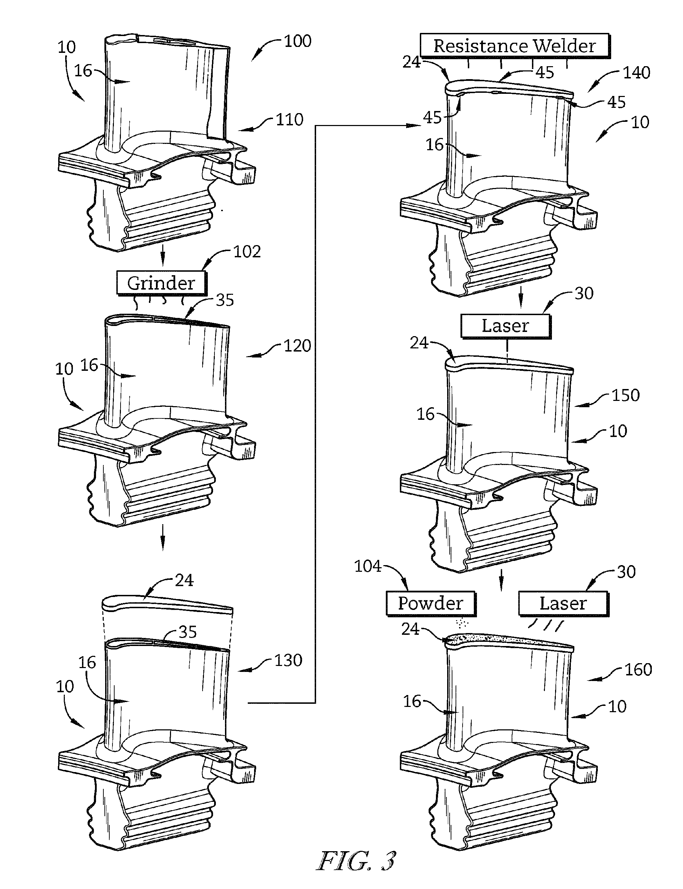

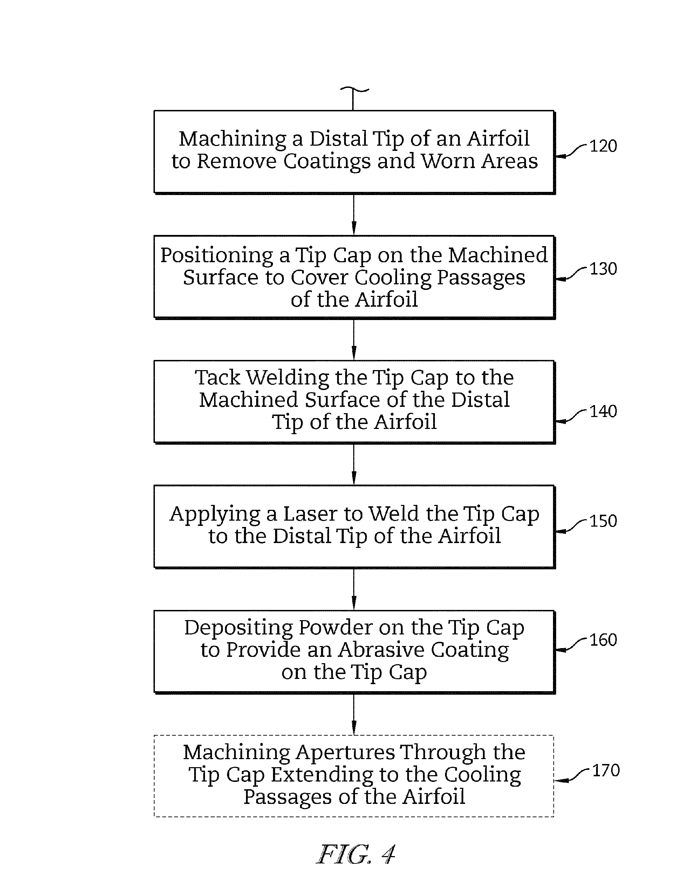

One illustrative method 100 for repairing a gas turbine engine blade, such as the blade 10 shown in Figs. 1 and 2, is shown illustratively in Fig. 3 and diagrammatically in Fig. 4. In a step 110 of the method 100, a damaged blade, such as the blade 10, may be provided for repair, as shown in Fig. 3. The damaged blade 10 may be cracked, broken, or may be damaged in any number of ways. The damaged blade 10 may be damaged along only a portion of the blade tip or the entire blade tip may be damaged. The damage to the blade 10 may result in the internal cooling passages, such as the cooling passages 22 shown in Figs. 1 and 3, to be exposed to the environment.

In a step 120 of the method 100, the distal tip 28 of an airfoil such as airfoil 16 shown in Figs. 1-3, may be removed to provide a planar distal surface 36, as shown illustratively in Fig. 3 and diagrammatically in Fig. 4. Optionally, the blade 10 may be cleaned prior to removing the coating material and/or the worn region. The distal tip 28 of the airfoil 16 may be removed thereby the coatings and worn or damaged areas of the airfoil 16 may also be removed. Illustratively, the removal of the distal tip 28 of the airfoil 16 may be performed by machining the surface of the distal tip 28 of the airfoil 16 using a grinder 102 as shown in Fig. 3. The machining may also include abrasive blasting of the surface. An example of abrasive blasting of the surface may include bead blasting which may forcibly propel a stream of abrasive material, such as a ceramic against the surface under high pressure smoothing the damaged surface and removing any contaminants. A pressurized fluid, typically air, or a centrifugal wheel may be used to propel the blasting material.

In a step 130 of the method 100, a tip cap such as the tip cap 24 in Figs. 1 and 2 may be positioned on the machined surface to cover the cooling passages 22 of the airfoil 16, as shown illustratively in Fig. 3 and diagrammatically in Fig. 4. The tip cap 24 may be a metal sheet and may be machined to the shape of the airfoil 16. The tip cap 24 may provide a flat surface for depositing material to lengthen the blade 10 and/or depositing the coating 26. The tip cap 24 may be designed to act as an integral filler material which may provide flexibility to the repair process.

In a step 140 of the method 100, the tip cap 24 may be tack welded to the machined surface of the distal tip 28 of the airfoil 16, as shown illustratively in Fig. 3 and diagrammatically in Fig. 4. The tack welds 45 may be used to temporarily keep the tip cap 24 in place prior to more permanently affixing the tip cap 24 to the distal tip 28 of the airfoil 16. Typically a tack weld 45 may be a short weld, but any type of tack weld may be used. In some examples other methods of temporarily holding the tip cap 24 in place may be used such as clamping, fixturing, or any other method known by one skilled in the art. The tip cap 24 may be tack welded in at least three locations, but any number of tack welds 45 may be needed. It may be beneficial to use more tack welds 45 along the leading edge and close to the trailing edge as well as along the suction and/or pressure side of the airfoil 16. However, the tack welds 45 may be used in any number of locations around the distal tip 28 of the airfoil 16.

In a step 150 of the method 100 the tip cap 24 may be welded to the distal tip 28 of the airfoil 16 as shown illustratively in Fig. 3 and diagrammatically in Fig. 4. In other embodiments, the tip cap 24 may be solid state welded, brazed, and/or fusion welded by other techniques to join the tip cap 24 to the distal tip 28 of the airfoil 16. In other embodiments, the tip cap 24 and distal tip 28 may be heated prior to joining. The tip cap 24 may be welded by a directed energy beam, illustratively depicted as a laser in Figs. 3 and 4. However any directed energy beam such as an electron energy beam may be used. The laser welding of the tip cap 24 may take place in an inert gas rich environment to form a joint between the sheet metal of the tip cap 24 and the machined distal tip 28 of the airfoil 16.

An inert gas may reduce the propensity for chemical reactions under given conditions. In some examples, the noble gases, purified nitrogen, and purified argon may be used as inert gases, but any gas which may not chemically react may be used. The laser welding of the tip cap 24 may be performed by autogenously laser welding. Autogenous laser welding may prevent cracking of the tip cap 24 and subsequently the airfoil 16. After laser welding, the tip cap 24 may also be a squealer tip.

The laser welding of step 150 in method 100 may be performed by measuring the geometry of the airfoil 16, as suggested in Figs. 3 and 4. The laser 30 may be applied normal to a plane 34 defined by the tip cap 24 and may track the tool path 36 around the airfoil 16, as shown in Figs. 5 and 6. The tool path 36 of the blade 10 may follow the component geometry of the airfoil 16.

The laser 30 may be adjusted to account for the variability in wall thickness around the airfoil 16. In other embodiments, the directed energy beam (e.g. laser) may approach the tip cap 24 and airfoil 16 at other angles while being adjusted to control the power applied to create a weld. The laser power density distribution is affected by spot or dot size and/or laser power. The laser peak power density may increase for smaller spot sizes. Each of laser peak power density, spot size, and speed may be inter-related such that changing one variable may require the other variables to be changed to produce the weld. The distance between the tip cap 24 and the laser 30 may be held constant or varied throughout the repair. Optionally, the tip cap 24 may be heat treated adding the tip cap 24 to the distal tip 28 of the airfoil 16. Optionally, the tip cap 24 may be machined to produce a flat surface for addition of a powder 104 or any other material.

In a step 160 of the method 100, a powder 104, powder feedstock, or any material may be deposited on the tip cap 24 to provide an abrasive coating 26 on the tip cap 24, as shown illustratively in Fig. 3 and diagrammatically in Fig. 4. The powder may be added to the tip cap 24 by various deposition methods such as welding, spray coating, heat treatment, brazing, and/or additive manufacturing wherein additive manufacturing may be adding material by sintering, thermo-mechanical deformation, and/or fusion. Spray coating may include, but is not limited to plasma spray or high velocity oxy-fuel spray repair methods. In some examples the powder may include NiCrAlY, Mar-M247, Mar-M247LC, L605, IN-738, or IN-738LC.

In some embodiments, a repair material may be added to produce an extension layer to lengthen and repair the airfoil 16 producing a new distal tip 28 of the airfoil 16 prior to adding the coating 26. The repair material may be a combination of metallic materials, metallic alloys, ceramics, or ceramic matrix composites which may compose the airfoil 16.

In an optional step 170 of the method 100, apertures may be machined through the tip cap extending to the cooling passages 22 of the airfoil 16, as shown diagrammatically in Fig. 3 and illustratively in Fig. 4. The apertures may open the cooling passages 22 to the environment to allow the cooling air to flow through the cooling passages 22 of the blade 10. An aperture may be an opening or a hole. Optionally, the coating 26 may be machined using a grinder or any other method to create a smooth surface along the distal tip 28 of the airfoil. Optionally, the entire blade 10 may be coated along the surface using the coating 26. The entire blade 10 may be coated by any number of methods for applying a coating such as spray coating, vapor deposition, heat treatment, brazing, welding, and/or additive manufacturing.

The cooling passages 22 of the blade 10 may be hollow and current repair technology may not bond to the blade tip if the cooling passages 22 are exposed. A portion of the blade tip may be missing due to operating conditions experienced. Holes along the blade tip may prevent plasma spray or high velocity oxy-fuel spray repair methods, because there is no substrate present to bond the repair material.

The repair method described herein may include a tip cap or material bonded to the tip of the machined blade to seal the internal cooling passages. The tip cap may be a uniform thickness, sheet metal machined to an airfoil-like shape with parallel edges at the outer diameter. The tip cap may be laser welded to the blade to produce a surface for adding material to produce a squealer tip via spray coating, heat treatment, brazing, welding, additive manufacturing, or other various deposition methods. In addition, the laser welding process which may be used to complete the repair may not include the use of powder or wire welding consumable and may not utilize preheating to complete the repair. The tip cap may be designed to act as an integral filler material which may provide flexibility to the repair process.

The repair method may include a series of steps, including but not limited to those described herein. The blade may be cleaned to remove any coating material and the worn region of the blade may be removed via machining to produce a flat surface. A piece of sheet metal may then be fixtured or tack welded to the machined surface prior to laser welding. The sheet metal may be an alloy which may be cobalt-, nickel-, or iron-based and may be alloyed with manganese, chromium, silicon, cobalt, tungsten, tantalum, aluminum, titanium, hafnium, rhenium, molybdenum, nickel, iron, boron, vanadium, carbon, and/or yttrium.

The sheet metal may then be autogenously laser welded in an inert gas rich environment to form a joint between the sheet metal and the machined surface. The tip cap may be joined to the blade via solid state welding, heat treatment, brazing, or any other fusion welding techniques. In the instance of brazing the tip cap to the machined surface, alternative material such as ceramics or composite materials may be used in place of a metallic cap.

After welding, the part may be heat treated and the tip cap top surface may be machined to produce a flat surface for subsequently adding material via various deposition methods. Material may be added via welding, spray coating, heat treatment, brazing or additive manufacturing. The material added may include a metallic alloy such as one that is cobalt-, nickel-, or iron-based and may be alloyed with manganese, chromium, silicon, cobalt, tungsten, tantalum, aluminum, titanium, hafnium, rhenium, molybdenum, nickel, iron, boron, vanadium, carbon, and/or yttrium. Specifically, the material may includeNiCrAlY, Mar-M247, Mar-M247LC, L605, IN-738, or IN-738LC. Material may be added to the entire tip cap surface or may be added to selective regions. The part may also be coated on the base metal surfaces prior to going back into service.

Single crystal turbine blades may have increased performance, but may be costly and difficult to repair. Turbine blades may suffer from material erosion, sulfidation, hot corrosion, and coating degradation and loss. Turbine blade repair capability may reduce acquisition and life cycle cost and enhance fleet readiness.

While the disclosure has been illustrated and described in detail in the foregoing drawings and description, the same is to be considered as exemplary and not restrictive in character, it being understood that only illustrative embodiments thereof have been shown and described and that all changes and modifications that come within the spirit of the disclosure are desired to be protected.

## Claims

1. A method for repairing a blade for use in a gas turbine engine, the method comprising
removing at least a portion of a distal tip of an airfoil included in the blade to remove damaged portions of the airfoil and to expose previously internal cooling passages,
positioning a tip cap in the place of the removed distal tip to cover the internal cooling passages, and
welding the tip cap to the airfoil by applying a directed energy beam onto the tip cap and the airfoil at a joint between the tip cap and the airfoil.

2. The method of Claim 1, wherein welding the tip cap to the airfoil includes moving the directed energy beam along an airfoil-shaped tool path corresponding to the shape of the airfoil, wherein, optionally:
the airfoil shaped tool path is determined by measuring the airfoil and calculating a path corresponding to the shape of the airfoil, the step of measuring the airfoil optionally including identifying a plurality of points along the airfoil with a sensor.

3. The method of any of Claims 1-2, wherein the directed energy beam is directed along a line that is normal to a plane defined by the tip cap, the directed energy beam optionally being a laser configured to couple to the tip cap and to the airfoil of the blade.

4. The method of any of Claims 1-3, further comprising coupling the tip cap to the airfoil before welding the tip cap to the airfoil, wherein, optionally, the tip cap is coupled to the airfoil by a plurality of tack welds and/or a cap fixture.

5. The method of any of Claims 1-4, wherein one of the power of the directed energy beam, speed of the directed energy beam, dot size of the directed energy beam, or any combination thereof is adjusted based on a thickness of an airfoil wall at the location the directed energy beam is coupled to the airfoil.

6. The method of any of Claims 1-5, wherein the distance between the directed energy beam and the airfoil is adjusted based on a thickness of an airfoil wall at the location the directed energy beam is coupled to the airfoil.

7. The method of any of Claims 1-6, further comprising:
heat treating the blade after the tip cap has been welded to the airfoil; and/or
machining the tip cap to produce a flat surface at the distal end of the tip cap.

8. The method of any of Claims 1-7, further comprising forming apertures through the tip cap that fluidly communicate with the internal cooling passages after the tip cap has been welded to the airfoil.

9. The method of any of Claims 1-8, further comprising heating a powder deposited along the tip cap to join the powder to the tip cap creating an extension layer on the tip cap lengthening the blade.

10. The method of any of Claims 1-9, wherein an abrasive coating is applied to the flat surface at the distal end of the tip cap.

11. The method of Claim 10, further comprising heat treating the blade after a coating is applied.

12. The method of any one of Claims 1-11, wherein:
the tip cap is a substantially flat sheet made from a metallic material; and/or
the distal tip removed is a cast portion of the airfoil or another tip cap previously welded to the airfoil; and/or
the tip cap has an airfoil shape when viewed normal to a plane defined by the tip cap.

13. A blade for use in a gas turbine engine, the blade comprising a root formed to include an attachment feature adapted to mate with a central wheel to couple the blade to the central wheel,
an airfoil having a proximal end arranged to face the root, and a distal tip, opposite the proximal end, wherein the airfoil includes internal cooling passages to conduct cooling air through the airfoil, and
a tip cap bonded to the distal tip of the airfoil to provide a uniform covering of the airfoil and provide a surface for adding material to the airfoil.

14. The blade of Claim 13, wherein the tip cap is bonded to the distal tip of the airfoil by a weld joint.
